# EUROPÄISCHE PATENTSCHRIFT

(11) **EP 2 791 644 B1**
(45) Veröffentlichungstag und Bekanntmachung des Hinweises auf die Patenterteilung: **02.03.2016**
(21) Anmeldenummer: 12769645.8
(22) Anmeldetag: 02.10.2012
(51) Int. Cl.: G01M 15/02

(54) **VERFAHREN UND PRÜFSTAND ZUM TESTEN EINES STARTERMOTORS**
METHOD AND TEST BENCH FOR TESTING A STARTER MOTOR
PROCÉDÉ ET BANC D'ESSAI POUR TESTER UN MOTEUR DE DÉMARREUR

(30) Priorität: 15.12.2011 AT 18362011
(43) Veröffentlichungstag der Anmeldung: 22.10.2014
(73) Patentinhaber: AVL List GmbH, 8020 Graz (AT)
(72) Erfinder: KOKAL, Helmut, 8020 Graz (AT); DANK, Matthias, 8045 Graz (AT); HOLZHAMMER, Peter, 6067 Absam (AT); PRETTENTHALER, Ronald, 8102 Semriach (AT); STOCKREITER, Martin, 8643 Allerheiligen (AT)
(74) Vertreter: Patentanwälte Pinter & Weiss OG
(86) Internationale Anmeldenummer: PCT/EP2012/069451
(87) Internationale Veröffentlichungsnummer: WO 2013/087244

(56) Entgegenhaltungen:
- WO-A1-01/65226
- DE-A1-102006 045 973
- US-A1- 2011 041 595

## Beschreibung

Die Erfindung betrifft ein Verfahren und einen Prüfstand zum Testen eines Startermotors mit einer mit dem Startermotor verbundenen elektrischen Belastungsmaschine, die einen Verbrennungsmotor simuliert, und einem Regler zum Regeln der elektrischen Belastungsmaschine.

Startermotoren für Verbrennungskraftmaschinen unterliegen aufgrund neuer Technologien, wie z.B. der Start-Stop-Technologie, immer höheren Anforderungen, insbesondere was die geforderte Anzahl von Startvorgängen betrifft. Waren vor 5 Jahren noch 30.000 Startvorgänge gefordert, werden heutzutage von Startermotoren bereits 300.000 Startvorgänge gefordert. Das erhöht zwangsweise auch die Anforderungen an das Testen von Startermotoren. Bisher übliche Tests am realen Verbrennungsmotor sind daher kaum mehr durchzuführen. Einerseits, weil zum Zeitpunkt des Tests eines Startermotors für einen neuen Verbrennungsmotor bzw. für einen neuen Antriebsstrang, dieser oftmals noch gar nicht verfügbar ist und andererseits, weil der Aufwand für einen solchen Prüfstand aufgrund der notwendigen Medienanschlüsse und Versorgungsleitungen, z.B. für Kühlwasser, Treibstoff, Abgas, Öl, etc., des Verbrennungsmotors aus Kosten- und Zeitgründen zu hoch ist.

Aus diesem Grund wurden bereits Prüfstände für Startermotoren von Verbrennungsmotoren konzipiert, bei denen der Verbrennungsmotor durch eine elektrische Maschine ersetzt und simuliert wird. Die DE 10 2006 045 973 A1 beschreibt einen derartigen Prüfstand. Darin wird die elektrische Maschine gemäß einer vorgebbaren Prüfkennlinie geregelt. Die Prüfkennlinie kann dabei aus Messungen am realen Verbrennungsmotor oder aus einem virtuellen Motor-modell erstellt werden. Die Prüfkennlinie ist dann aber für den jeweiligen Prüflauf vorgegeben und wird bei jedem Prüflauf, der z.B. 50.000 mal wiederholt wird, abgefahren.

Das Problem das dabei besteht liegt darin, dass ein System aus Startermotor und Verbrennungsmotor kein exaktes deterministisches zeitliches Verhalten aufweist. Vielmehr zeigt ein derartiges Elektromechanisches System ein, in gewissen Grenzen, zeitlich zufälliges Verhalten, das sich in der Größenordnung von Millisekunden ändern kann. Z.B. variiert der zeitliche Ablauf vom Zeitpunkt des Startsignals bis zum Einspuren des Starterritzels und bis der Startermotor das benötigte Drehmoment aufbaut aufgrund der Mechanik und der elektromechanischen Teile (z.B. Relais). Ebenso kann es zeitliche Variationen in der Drehmomentenerzeugung geben. Dadurch decken sich die theoretische Prüfkennlinie und der reale Betrieb nicht vollständig, sondern es kann zu einem zeitlichen Versatz kommen. Wenn der Startermotor z.B. laut Prüfkennlinie schon angelaufen sein soll, also bereits eine Drehzahl n≠0 aufweisen soll, kann es vorkommen, dass der Belastungsmaschine noch ein Drehzahl n=0 vorgegeben wird, was wie ein blockierender Motor wirkt. Dadurch würde der Starterstrom stark ansteigen, was zu unrealistischen Belastungen am Startermotor bzw. am Starterritzel und Starterkranz führen kann. Ein solcher Prüflauf wäre nicht repräsentativ und könnte auch nicht im Test berücksichtigt werden. Darüber hinaus haben praktische Versuche auch gezeigt, dass sich dadurch im Betrieb mit einem solchen Prüfstand Schädigungsbilder am Startermotor ergeben, die in der Praxis nicht auftreten. Doch damit ist ein solcher Prüfstand für reale Tests von Startermotoren unbrauchbar.

Es ist daher eine Aufgabe der gegenständlichen Erfindung die oben angeführten Probleme beim Testen von Startermotoren auf Prüfständen mit einer elektrischen Belastungsmaschine zu beheben.

Diese Aufgabe wird erfindungsgemäß dadurch gelöst, indem in einer Simulationseinheit, in der ein mathematisches Modell des Verbrennungsmotors implementiert ist, mit dem mathematischen Modell aus gemessenen Istgrößen des Betriebs der elektrischen Belastungsmaschine zu jedem Abtastzeitpunkt der Regelung ein neuer Belastungssollwert ermittelt wird, der dem Regler zugeführt wird. Dadurch, dass keine zeitbasierte Prüfkennlinie vorgegeben wird, sondern zu jedem Abtastzeitpunkt der Regelung der zu erwartende aktuelle Zustand des Verbrennungsmotors berechnet wird, ist zu jeden Zeitpunkt gewährleistet, dass der Regelung der aktuelle Zustand zugrundegelegt wird, womit ein zeitlicher Versatz von Istzustand und Sollvorgaben vermieden wird. Damit ist eine solche Regelung unempfindlich gegen unvermeidbare, zufällige zeitliche Variationen im elektromechanischen System aus Verbrennungsmotor und Startermotor.

Die Genauigkeit des Prüfstandes bzw. des Prüfverfahrens kann erhöht werden, wenn das Trägheitsmoment der elektrischen Belastungsmaschine im Wesentlichen dem Trägheitsmoment des realen Verbrennungsmotors entspricht.

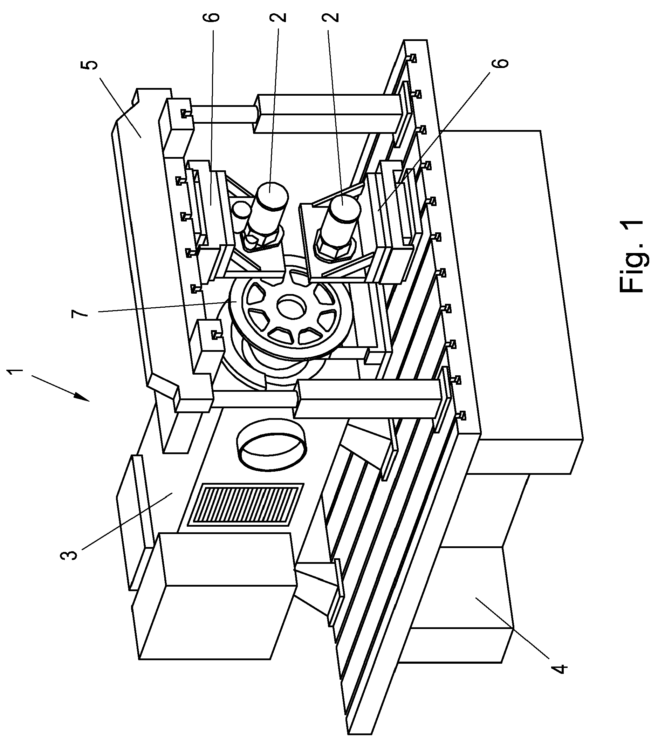

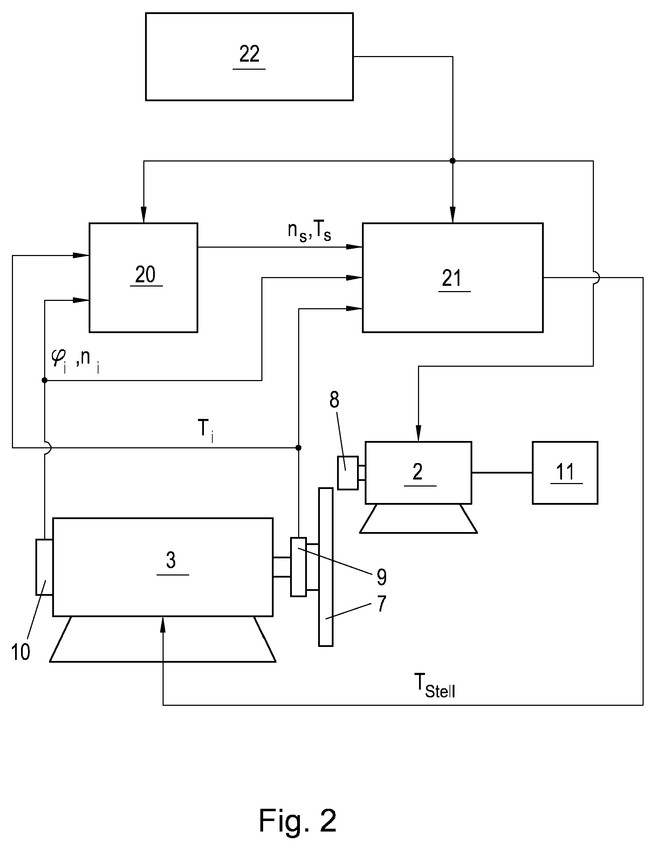

Die gegenständliche Erfindung wird nachfolgend unter Bezugnahme auf die beispielhaften, schematischen und nicht einschränkenden Figuren 1 und 2 näher erläutert. Dabei zeigt
Fig. 1 einen erfindungsgemäßen Prüfstand und
Fig. 2 ein Blockschaltbild des erfindungsgemäßen Regelkonzeptes.

Ein erfindungsgemäßer Prüfstand 1 zum Test von Startermotoren 2, wie in Fig.1 dargestellt, umfasst eine elektrische Belastungsmaschine 3, z.B. eine permanentmagnetisch erregte Synchronmaschine, eine Halteeinrichtung 5, zum lagerichtigen Befestigen eines Startermotors 2, und ein Grundgestell 4, auf dem die einzelnen Teil des Prüfstandes 1 angeordnet sind. Weiters ist eine elektrische Versorgungseinheit 11, z.B. eine 12V Fahrzeugbatterie oder ein Batteriesimulator, vorgesehen (siehe Fig.2). Wird ein Batteriesimulator verwendet, so können auch Prüfläufe mit unterschiedlichen Batterieladezuständen durchgeführt werden.

Die Halteeinrichtung 5 kann eine Aufnahmeeinrichtung 6 vorsehen, an der der Startermotor 2 befestigt wird. Die Aufnahmeeinrichtung 6 kann relativ zur Halteeinrichtung 5 bewegt werden und/oder die Halteeinrichtung 5 kann relativ zum Grundgestellt 4 bewegt werden, um den Startermotor 2 einfach in richtiger Position zur elektrischen Belastungsmaschine 3 auszurichten und lagerichtig zu fixieren. Ebenso ist es möglich, einen zweiten Startermotor 2 am Prüfstand 1 anzuordnen, wie in Fig.1 dargestellt, um mit einem Prüfstand mehrere Startermotoren 2 gleichzeitig testen zu können. Dazu kann vorgesehen sein, dass ein weiterer Startermotor 2 ebenfalls an der Halteeinrichtung 5 angeordnet wird. Alternativ kann dieser mit einer Aufnahmeeinrichtung 6 auch direkt auf dem Grundgestell 4 angeordnet werden.

Abtriebsseitig ist an der elektrischen Belastungsmaschine 3 ein Starterkranz 7 vorgesehen. Der Starterkranz 7 entspricht dabei bevorzugt dem realen Starterkranz, wie er auch in einem Fahrzeug verbaut wäre. Am Startermotor 2 ist ein bekanntes Starterritzel 8 (siehe Fig.2), hier nicht dargestellt, angeordnet, dass für den Startvorgang in den Starterkranz 7 einspurt. Der Einspur- und Startvorgang ist an sich hinlänglich bekannt, weshalb hier nicht näher darauf eingegangen wird. Die elektrische Belastungsmaschine 3 simuliert dabei einen Verbrennungsmotor, der durch den Startermotor 2 gestartet werden soll. Es kann auch vorgesehen sein, den Starterkranz 7 vor dem Start eines Prüflaufes eine parametrierbare Position zu bringen.

An der elektrischen Belastungsmaschine 3 sind, wie in Fig.2 gezeigt, Messeinrichtungen angeordnet, wie z.B. ein Winkelgeber 10 zur Erfassung des Drehwinkels ϕᵢ und/oder Drehzahl nᵢ, und/oder ein Messflansch 9 zur Erfassung von Drehmoment Tᵢ der elektrischen Belastungsmaschine 3. Die Drehzahl nᵢ kann natürlich auch aus dem Drehwinkel ϕᵢ abgeleitet werden.

In einer Simulationseinheit 20 ist ein mathematisches Modell des Verbrennungsmotors implementiert, das den Verbrennungsmotor simuliert. Dabei ist das Modell vorzugsweise so ausgeführt, dass dieses den Verbrennungsmotor vom Start weg, also beginnend ab Drehzahl n=0, simulieren kann. Simulieren bedeutet in diesem Zusammenhang, dass das Modell einen aktuellen Betriebszustand des Verbrennungsmotors basierend auf einem aktuellen Istdrehwinkel ϕᵢ, oder gleichwertig verstrichener Zeit, ab Start und basierend auf einem aktuellen Betriebszustand der elektrischen Belastungsmaschine 3, z.B. in Form einer Istdrehzahl nᵢ und/oder eines Istdrehmoments Tᵢ, berechnen und in Form eines Belastungssollwertes ausgeben kann, z.B. einer Solldrehzahl nₛ im Falle einer Drehzahlregelung oder eines Solldrehmoments Tₛ im Falle einer Drehmomentenregelung. Der derart berechnete Belastungssollwert wird einem Regler 21 zugeführt, der einen Drehmomentenstellwert Tₛₜₑₗₗ, bzw. Drehzahlstellwert nₛₜₑₗₗ, berechnet und so die elektrische Belastungsmaschine 3 regelt. Der Regler 21 kann dazu auch die aktuellen Istwerte, z.B. Istdrehwinkel ϕᵢ, Istdrehzahl nᵢ und/oder Istdrehmoments Tᵢ erhalten.

Der Prüflauf wird von einer Prüfstandssteuereinheit 22 gesteuert, überwacht und ausgewertet. Die Prüfstandssteuereinheit 22 kann dabei mit der Simulationseinheit 20, mit dem Regler 21, mit dem Startermotor 21 und/oder mit der elektrischen Belastungsmaschine 3 verbunden sein und Daten austauschen. Insbesondere wird ein Prüflauf von der Prüfstandssteuereinheit 22 durch ein Startsignal gestartet.

Nach Start des Prüflaufes berechnet die Simulationseinheit 20 aus dem mathematischen Modell zu jedem Abtastzeitpunkt der Regelung, z.B. alle 100µsek, für den aktuellen Drehwinkel ϕ ab Start oder für die aktuelle Zeit ab Start den korrekten aktuellen Betriebszustand des Verbrennungsmotors und übergibt einen Belastungssollwert, z.B. in Form einer Solldrehzahl nₛ und/oder eines Solldrehmoments Tₛ, an den Regler 21, der diese Sollwertvorgabe z.B. in ein reales Drehmoment (Drehmomentenstellwert Tₛₜₑₗₗ) der elektrischen Belastungsmaschine 3 umsetzt, d.h. die elektrische Belastungsmaschine 3 so regelt, dass sich der berechnete Belastungszustand für den Startermotor 2 an der elektrischen Belastungsmaschine 3 einstellt.

Aufgrund der hohen Dynamik des Verhaltens von Verbrennungsmotor, bzw. der elektrischen Belastungsmaschine 3 als Simulation des Verbrennungsmotors, ist es vorteilhaft, wenn die im Regler 21 zugrundegelegte Regelung eine geringe Totzeit, bevorzugt < 1 msek, aufweist, was ein schnelles Reagieren auf Änderungen der Istwerte und eine hohe Abtastfrequenz der Regelung, z.B. wie hier 10kHz, ermöglicht. Es können auch an sich bekannte selbstlernende Regelalgorithmen eingesetzt werden, mit denen die Totzeit im Regelkreis zumindest teilweise kompensiert wird.

Ebenso ist es vorteilhaft, wenn das Trägheitsmoment der elektrischen Belastungsmaschine 3 im Wesentlichen dem Trägheitsmoment des realen Verbrennungsmotors entspricht. Die Trägheitsmomente unterscheiden sich dabei bevorzugt um maximal 20%, besonders vorteilhaft um maximal 10% und ganz besonders bevorzugt um maximal 5%. Das Trägheitsmoment des Verbrennungsmotors wird durch die elektrische Belastungsmaschine 3 simuliert. Diese Trägheitssimulation arbeitet aus Gründen von Systemtotzeiten und Systemnichtlinearitäten nicht ideal. Je näher die zu simulierende Trägheit aber an der realen Trägheit der elektrischen Maschine liegt, umso genauer arbeitet die Simulation des Verbrennungsmotors bzw. der Prüfstand 1 zum Testen des Startermotors 2.

## Patentansprüche

1. Prüfstand zum Testen eines Startermotors (2) mit einer mit dem Startermotor (2) verbundenen elektrischen Belastungsmaschine (3), die einen Verbrennungsmotor simuliert, und einem Regler (21) zum Regeln der elektrischen Belastungsmaschine (3), **dadurch gekennzeichnet, dass** eine Simulationseinheit (20) vorgesehen ist, in der ein mathematisches Modell des Verbrennungsmotors implementiert ist und dass die Simulationseinheit (20) ausgebildet ist, mit dem mathematischen Modell aus gemessenen Istgrößen (ϕᵢ, nᵢ, Tᵢ) des Betriebs der elektrischen Belastungsmaschine (3) zu jedem Abtastzeitpunkt der Regelung einen neuen Belastungssollwert (nₛ, Tₛ) zu ermitteln, der dem Regler (21) zugeführt wird.

2. Prüfstand nach Anspruch 1, **dadurch gekennzeichnet, dass** das Trägheitsmoment der elektrischen Belastungsmaschine (3) im Wesentlichen dem Trägheitsmoment des realen Verbrennungsmotors entspricht.

3. Verfahren zum Testen eines Startermotors (2) auf einem Prüfstand (1) mit einer mit dem Startermotor (2) verbundenen elektrischen Belastungsmaschine (3), mit der ein Verbrennungsmotor simuliert wird, und einem Regler (21) mit dem die elektrische Belastungsmaschine (3) geregelt wird, **dadurch gekennzeichnet, dass** aus einem mathematischen Modell des Verbrennungsmotors aus gemessenen Istgrößen (ϕᵢ, nᵢ, Tᵢ) des Betriebs der elektrischen Belastungsmaschine (3) zu jedem Abtastzeitpunkt der Regelung ein neuer Belastungssollwert (nₛ, Tₛ) berechnet wird, der dem Regler (21) zur Regelung der elektrischen Belastungsmaschine (3) zugeführt wird.

## Claims

1. Test bench for testing a starter motor (2), with an electrical dynamometer (3) that is connected to the starter motor (2) and simulates a combustion engine, and a controller (21) for controlling the electrical dynamometer (3), **characterized in that** a simulation unit (20) is provided in which a mathematical model of the combustion engine is implemented, and that the simulation unit (20) is adapted to determine a new load setpoint (nₛ, Tₛ) at every sampling time point of the control using the mathematical model with measured actual values (ϕᵢ, nᵢ, Tᵢ) of the operation of the electrical dynamometer (3), which new load setpoint (nₛ, Tₛ) is fed to the controller (21).

2. Test bench according to claim 1, **characterized in that** the moment of inertia of the electrical dynamometer (3) corresponds substantially to that of the real combustion engine.

3. Method for testing a starter motor (2) on a test bench (1), with an electrical dynamometer (3) that is connected to the starter motor (2), with which a combustion engine is simulated, and a controller (21) with which the electrical dynamometer (3) is controlled, **characterized in that** a new load setpoint (nₛ, Tₛ) is calculated from a mathematical model of the combustion engine with measured actual values (ϕᵢ, nᵢ, Tᵢ) of the operation of the electrical dynamometer (3) at every sampling time point of the control, which new load setpoint (nₛ, Tₛ) is fed to the controller (21) to control the electrical dynamometer (3).

## Revendications

1. Banc d'essai pour tester un moteur de démarreur (2) comprenant une machine de charge électrique (3) qui est reliée au moteur de démarreur (2) et qui simule un moteur à combustion interne, et un régulateur (21) servant à réguler la machine de charge électrique (3), **caractérisé en ce qu'**il est prévu une unité de simulation (20) dans laquelle est implémenté un modèle mathématique du moteur à combustion interne, et **en ce que** l'unité de simulation (20) est configurée pour déterminer au moyen du modèle mathématique, à partir de valeurs réelles mesurées (ϕᵢ, nᵢ, Tᵢ) du fonctionnement de la machine de charge électrique (3) à chaque temps d'échantillonnage de la régulation, une nouvelle valeur de charge de consigne (nₛ, Tₛ) qui est amenée au régulateur (21).

2. Banc d'essai selon la revendication 1, **caractérisé en ce que** le moment d'inertie de la machine de charge électrique (3) correspond sensiblement au moment d'inertie du moteur à combustion interne réel.

3. Procédé de test d'un moteur de démarreur (2) sur un banc d'essai (1) comprenant une machine de charge électrique (3) qui est reliée au moteur de démarreur (2) et qui simule un moteur à combustion interne, et un régulateur (21) servant à réguler la machine de charge électrique (3), **caractérisé en ce que** l'on calcule au moyen d'un modèle mathématique du moteur à combustion interne, à partir de valeurs réelles mesurées (ϕᵢ, nᵢ, Tᵢ) du fonctionnement de la machine de charge électrique (3) à chaque temps d'échantillonnage de la régulation, une nouvelle valeur de charge de consigne (nₛ, Tₛ) qui est amenée au régulateur (21) pour réguler la machine de charge électrique.
